# EUROPEAN PATENT APPLICATION

(11) **EP 3 082 050 A1**
(43) Date of publication of application: **19.10.2016**
(21) Application number: 14795196.6
(22) Date of filing: 27.05.2014
(51) Int. Cl.: G06F 17/30

(54) **MASS DATA FUSION STORAGE METHOD AND SYSTEM**

(30) Priority: 10.12.2013 CN 201310669985
(71) Applicant: ZTE Corporation, Shenzhen, Guangdong 518057 (CN)
(72) Inventor: WANG, Fenglai, Shenzhen Guangdong 518057 (CN); ZHU, Kezhi, Shenzhen Guangdong 518057 (CN); YANG, Qingping, Shenzhen Guangdong 518057 (CN); CHEN, Fuzhong, Shenzhen Guangdong 518057 (CN)
(74) Representative: Deambrogi, Edgardo
(86) International application number: PCT/CN2014/078558
(87) International publication number: WO 2014/180395

(57) **Abstract**

The embodiments of disclosure disclose a method and system for massive data fusion storage. The method includes that: a data fusion subsystem receives a write operation request from a structured storage engine or a Not Only Structured Query Language (NoSQL) storage engine, wherein the structured storage engine supports SQL-based structured data read/write operation and the NoSQL storage engine supports key-value-based NoSQL data read/write operation; and the data fusion subsystem executes write operation on a distributed file subsystem according to the write operation request, wherein the distributed file subsystem is further configured to receive a read operation request from the structured storage engine or the NoSQL storage engine and execute read operation according to the read operation request. The effects of reducing data redundancy and reducing system operation and maintenance cost are achieved.

## Description

### Technical Field

The disclosure relates to the communications field, and in particular to a method and system for massive data fusion storage.

### Background

Along with rapid development of an Internet, massive data may be produced every day. An Internet data center of the Elemented States points out that data on the Internet increases by 50% every year and is doubled every two years, and more than 90% of existing data throughout the world is produced in recent years. How to efficiently process these massive data is a hotspot in recent years.

In an existing massive data processing system, there is a Structured Query Language (SQL)-like structured storage engine for processing relational data as well as a Not Only SQL (NoSQL) storage engine for processing non-relational data; wherein, the structured storage engine mainly realizes functions of structured data definition, loading, storage, query, analysis and the like of massive data and provides operation of data query, statistics, grouping, sorting and the like through an SQL like a conventional relational database; and the NoSQL storage engine provides a high-reliability, high-executeance, column-oriented and scalable distributed key-value database system, including creation management over a table, a column family and an index and data creation, storage, updating, deletion, query and intelligent scanning, and may implement load balance in a large-scale cluster.

A structured storage engine and a NoSQL storage engine are mutually independent in physical data storage, and are respectively applied to different application scenarios. For the same data, operation of massive data query, statistics, grouping, sorting and the like through the SQL and efficient query and intelligent scanning in a key-value manner may both be required according to service requirements, which is difficult to implement in an existing massive data processing system. Obviously, the existing massive data processing system has the following main problems that: (1) the structured storage engine and the NoSQL engine are mutually independent in the physical data storage, and the same data is unlikely to support both an SQL manner and the key-value manner, so that diversified service requirements may not be met; and (2) for a service requirement, if the structured storage engine stores a piece of data supporting the SQL and the NoSQL storage engine also stores the same piece of data supporting the key-value manner, the massive data system has a large amount of redundant data, and in addition, maintaining two pieces of data may increase operation and maintenance cost.

For a problem that the structured storage engine and the NoSQL storage engine may not meet diversified service requirements and increase operation and maintenance cost in the related art, there is yet no effective solution.

### Summary

The embodiments of the disclosure provide a method and system for massive data fusion storage, so as to at least solve the above-mentioned problem.

According to an embodiment of the disclosure, a method for massive data fusion storage is provided, which may include that:
receiving, by a data fusion subsystem, a write operation request from a structured storage engine or a Not Only Structured Query Language, NoSQL, storage engine, wherein the structured storage engine supports SQL-based structured data read/write operation and the NoSQL storage engine supports key-value-based NoSQL data read/write operation; and executing, by the data fusion subsystem, write operation on a distributed file subsystem according to the write operation request, wherein the distributed file subsystem is further configured to receive a read operation request from the structured storage engine or the NoSQL storage engine and execute read operation according to the read operation request.

In an example embodiment, before receiving, by the data fusion subsystem, the write operation request from the structured storage engine or the NoSQL storage engine, the method further includes: establishing, by the data fusion subsystem, a mapping relationship between the structured storage engine and the NoSQL storage engine in terms of metadata definition, wherein the mapping relationship is used for keeping data consistency between the structured storage engine and the NoSQL storage engine.

In an example embodiment, when the data fusion subsystem receives the write operation request from the structured storage engine, executing, by the data fusion subsystem, the write operation on the distributed file subsystem according to the write operation request includes: judging, by the data fusion subsystem, whether or not there exists a mapping relationship between the structured storage engine and the NoSQL storage engine, sending, by the data fusion subsystem, the write operation request to the distributed file subsystem to execute data write operation when a judgment result is that there exists the mapping relationship between the structured storage engine and the NoSQL storage engine and the write operation is not simultaneously executed by the structured storage engine and the NoSQL storage engine; and/or establishing, by the data fusion subsystem, the mapping relationship on the NoSQL storage engine when the judgment result is that there does not exist the mapping relationship between the structured storage engine and the NoSQL storage engine.

In an example embodiment, when the data fusion subsystem receives the write operation request from the NoSQL storage engine, executing, by the data fusion subsystem, the write operation on the distributed file subsystem according to the write operation request includes: judging, by the data fusion subsystem, whether or not there exists a mapping relationship between the structured storage engine and the NoSQL storage engine, sending, by the data fusion subsystem, the write operation request to the distributed file subsystem to execute data write operation when a judgment result is that there exists the mapping relationship between the structured storage engine and the NoSQL storage engine and the write operation is not simultaneously executed by the structured storage engine and the NoSQL storage engine; and/or establishing, by the data fusion subsystem, the mapping relationship on the structured storage engine when the judgment result is that there does not exist the mapping relationship between the structured storage engine and the NoSQL storage engine.

In an example embodiment, after executing, by the data fusion subsystem, the write operation on the distributed file subsystem according to the write operation request, the method further includes: receiving, by the data fusion subsystem, a write operation result fed back by the distributed file subsystem.

According to another embodiment of the disclosure, a system for massive data fusion storage is provided, which may include:
a data fusion subsystem, a structured storage engine, a Not Only Structured Query Language, NoSQL, storage engine and a distributed file subsystem, wherein the data fusion subsystem includes: a first receiving component, configured to receive a write operation request from the structured storage engine or the NoSQL storage engine, wherein the structured storage engine supports SQL-based structured data read/write operation and the NoSQL storage engine supports key-value-based NoSQL data read/write operation; a processing component, configured to execute write operation on the distributed file subsystem according to the write operation request; wherein the distributed file subsystem is further configured to receive a read operation request from the structured storage engine or the NoSQL storage engine and execute read operation according to the read operation request.

In an example embodiment, the data fusion subsystem further includes: an establishment component, configured to establish a mapping relationship between the structured storage engine and the NoSQL storage engine in terms of metadata definition, wherein the mapping relationship is used for keeping data consistency between the structured storage engine and the NoSQL storage engine.

In an example embodiment, the processing component includes: a first processing element, configured to, when the data fusion subsystem receives the write operation request from the structured storage engine, judge whether or not there exists the mapping relationship between the structured storage engine and the NoSQL storage engine, send the write operation request to the distributed file subsystem to execute data write operation in a case that a judgment result is that there exists the mapping relationship between the structured storage engine and the NoSQL storage engine and the write operation is not simultaneously executed by the structured storage engine and the NoSQL storage engine, and/or establish the mapping relationship on the NoSQL storage engine in a case that the judgment result is that there does not exist the mapping relationship between the structured storage engine and the NoSQL storage engine.

In an example embodiment, the processing component includes: a second processing element, configured to, when the data fusion subsystem receives the write operation request from the NoSQL storage engine, judge whether or not there exists the mapping relationship between the structured storage engine and the NoSQL storage engine, send the write operation request to the distributed file subsystem to execute data write operation in a case that a judgment result is that there exists a mapping relationship between the structured storage engine and the NoSQL storage engine and the write operation is not simultaneously executed by the structured storage engine and the NoSQL storage engine, and/or establish the mapping relationship on the structured storage engine in a case that the judgment result is that there does not exist a mapping relationship between the structured storage engine and the NoSQL storage engine.

In an example embodiment, the data fusion subsystem further includes: a second receiving component, configured to receive a write operation result fed back by the distributed file subsystem.

According to the embodiments of the disclosure, a manner of providing SQL and NoSQL supporting massive data fusion storage service by integrating physical data storage manners of the structured storage engine and the NoSQL storage engine to enable the same piece of data to support both an SQL manner and a key-value manner is adopted, so that the problem that the structured storage engine and the NoSQL storage engine may not meet diversified service requirements and increase operation and maintenance cost in the related art is solved, and the effects of reducing data redundancy and lowering system operation and maintenance cost are further achieved.

### Brief Description of the Drawings

The drawings described here are adopted to provide further understanding of the disclosure, and form a part of the disclosure. Schematic embodiments of the disclosure and description thereof are adopted to explain the disclosure and not intended for form improper limits to the disclosure. In the drawings:
Fig. 1 is a flowchart of a method for massive data fusion storage according to an embodiment of the disclosure;
Fig. 2 is a structural block diagram of a system for massive data fusion storage according to an embodiment of the disclosure;
Fig. 3 is a structural block diagram of a system for massive data fusion storage according to an example embodiment of the disclosure;
Fig. 4 is a structural schematic diagram of a system for supporting SQL and NoSQL massive data fusion storage according to an example embodiment of the disclosure;
Fig. 5 is a flowchart of write operation processing of a structured storage engine according to an example embodiment of the disclosure;
Fig. 6 is a flowchart of write operation processing of a NoSQL storage engine according to an example embodiment of the disclosure; and
Fig. 7 is a flowchart of read operation of a structured storage engine and a NoSQL storage engine according to an example embodiment of the disclosure.

### Detailed Description

The disclosure will be described below with reference to the drawings and embodiments in detail. It needs to be noted that the embodiments in the disclosure and characteristics in the embodiments may be combined in a case of no conflicts.

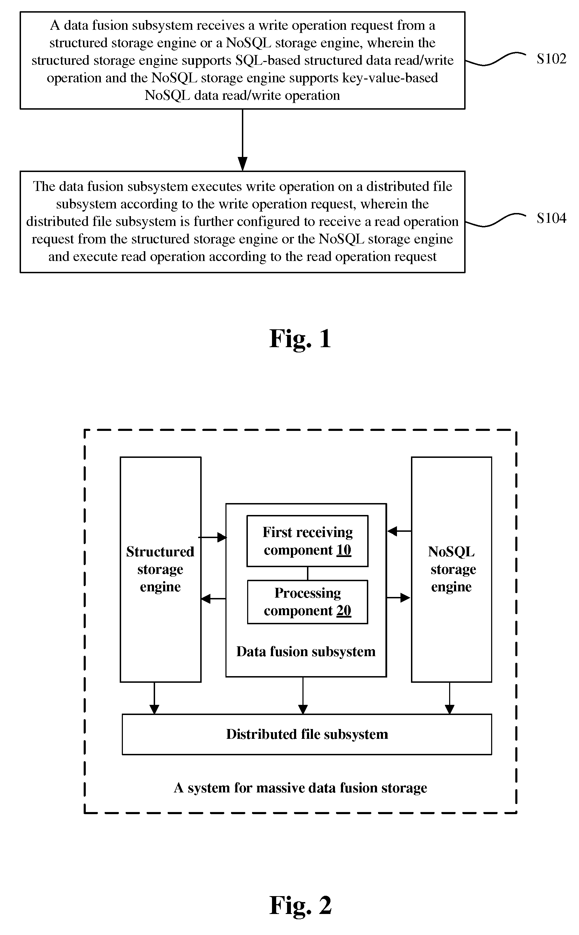

The embodiments of the disclosure provide a method for massive data fusion storage. Fig. 1 is a flowchart of a method for massive data fusion storage according to an embodiment of the disclosure, and as shown in Fig. 1, the method mainly includes the following steps (Step 102-Step 104):
Step 102: a data fusion subsystem receives a write operation request from a structured storage engine or a NoSQL storage engine, wherein the structured storage engine supports SQL-based structured data read/write operation and the NoSQL storage engine supports key-value-based NoSQL data read/write operation; and
Step 104: the data fusion subsystem executes write operation on a distributed file subsystem according to the write operation request, wherein the distributed file subsystem is further configured to receive a read operation request from the structured storage engine or the NoSQL storage engine and execute read operation according to the read operation request.

By each of the steps, data physical storage manners of the structured storage engine and the NoSQL storage engine are integrated to enable the same piece of data to support both an SQL manner and a key-value manner, thereby providing SQL and NoSQL supporting massive data fusion storage service.

In the embodiment, before Step 102 is executed, the data fusion subsystem may establish a mapping relationship between the structured storage engine and the NoSQL storage engine in terms of metadata definition, wherein the mapping relationship is used for keeping data consistency between the structured storage engine and the NoSQL storage engine.

In an example implementation mode of the embodiment, when the data fusion subsystem receives the write operation request from the structured storage engine, Step 104 may be implemented in a manner as follows: the data fusion subsystem judges whether or not there has existed the mapping relationship between the structured storage engine and the NoSQL storage engine, sends the write operation request to the distributed file subsystem to execute data write operation in a case that a judgment result is that there has existed the mapping relationship between the structured storage engine and the NoSQL storage engine and the write operation is not simultaneously executed, and/or establishes the mapping relationship on the NoSQL storage engine in a case that the judgment result is that there has existed the mapping relationship between the structured storage engine and the NoSQL storage engine.

In another example implementation mode of the embodiment, when the data fusion subsystem receives the write operation request from the NoSQL storage engine, Step 104 may be implemented in a manner as follows: the data fusion subsystem judges or not whether there has existed the mapping relationship between the structured storage engine and the NoSQL storage engine, sends the write operation request to the distributed file subsystem to execute data write operation in a case that a judgment result is that there has existed the mapping relationship between the structured storage engine and the NoSQL storage engine and write operation is not simultaneously executed, and/or establishes the mapping relationship on the structured storage engine in a case that the judgment result is that there has not existed the mapping relationship between the structured storage engine and the NoSQL storage engine.

In the embodiment, after Step 104 is executed, the data fusion subsystem may further receive a write operation result fed back by the distributed file subsystem.

The embodiments of the disclosure also provide a system for massive data fusion storage, which is configured to implement the above-mentioned method for massive data fusion storage. Fig. 2 is a structural block diagram of a system for massive data fusion storage according to an embodiment of the disclosure, and as shown in Fig. 2, the system includes: a data fusion subsystem, a structured storage engine, a NoSQL storage engine and a distributed file subsystem, wherein the data fusion subsystem includes: a first receiving component 10, configured to receive a write operation request from the structured storage engine or the NoSQL storage engine, wherein the structured storage engine supports SQL-based structured data read/write operation and the NoSQL storage engine supports key-value-based NoSQL data read/write operation; a processing component 20, configured to execute write operation on the distributed file subsystem according to the write operation request; and the distributed file subsystem is further configured to receive a read operation request from the structured storage engine or the NoSQL storage engine and execute read operation according to the read operation request.

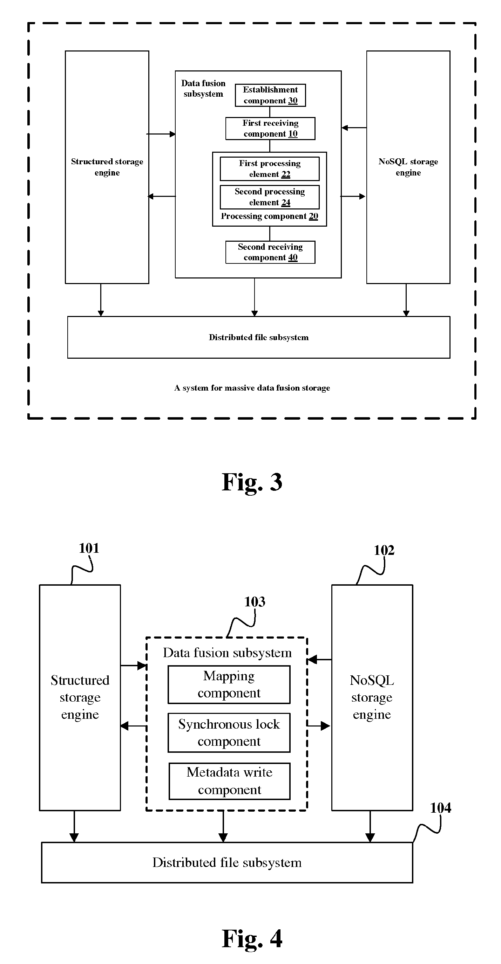

Fig. 3 is a structural block diagram of a system for massive data fusion storage according to an example embodiment of the disclosure, and as shown in Fig. 3, the data fusion subsystem in the system for the massive data fusion storage may further include: an establishment component 30, configured to establish a mapping relationship between the structured storage engine and the NoSQL storage engine in terms of metadata definition, wherein the mapping relationship is used for keeping data consistency between the structured storage engine and the NoSQL storage engine.

In the system for the massive data fusion storage, the processing component 20 may include: a first processing element 22, configured to, when the data fusion subsystem receives the write operation request from the structured storage engine, judge whether or not there has existed the mapping relationship between the structured storage engine and the NoSQL storage engine, send the write operation request to the distributed file subsystem to execute data write operation in a case that a judgment result is that there has existed the mapping relationship between the structured storage engine and the NoSQL storage engine and the write operation is not simultaneously executed, and/or establish the mapping relationship on the NoSQL storage engine in a case that the judgment result is that there has not existed the mapping relationship between the structured storage engine and the NoSQL storage engine.

In the system for the massive data fusion storage, the processing component 20 may include: a second processing element 24, configured to, when the data fusion subsystem receives the write operation request from the NoSQL storage engine, judge whether or not there has existed the mapping relationship between the structured storage engine and the NoSQL storage engine, send the write operation request to the distributed file subsystem to execute data write operation in a case that a judgment result is that there has existed the mapping relationship between the structured storage engine and the NoSQL storage engine and the write operation is not simultaneously executed, and/or establish the mapping relationship on the structured storage engine in a case that the judgment result is that there has not existed the mapping relationship between the structured storage engine and the NoSQL storage engine.

In the system for the massive data fusion storage, the data fusion subsystem may further include: a second receiving component 40, configured to receive a write operation result fed back by the distributed file subsystem.

According to the method and system for the massive data fusion storage provided by the embodiments, a manner of providing SQL and NoSQL supporting massive data fusion storage service by integrating data physical storage manners of the structured storage engine and the NoSQL storage engine to enable the same piece of data to support both an SQL manner and a key-value manner may be adopted, and in such a manner, diversified service requirements may be met.

The method and system for massive data fusion storage provided by the embodiments will be described and explained below with reference to Fig. 4 to Fig. 7 and example embodiments in more detail.

The example embodiments mainly provides a method for supporting SQL and NoSQL massive data fusion storage and a system for massive data processing including a structured storage engine, a NoSQL storage engine, a data fusion subsystem and a distributed file subsystem.

At first, an implementation process of the example embodiment will be generally described.

The method for supporting SQL and NoSQL massive data fusion storage provided by the example embodiment mainly includes:
Step 1: a structured storage engine is responsible for functions of structured data definition, loading, storage, query, analysis and the like of data, and provides operation of data query, statistics, grouping, sorting and the like through an SQL like a conventional relational database;
Step 2: a NoSQL storage engine is responsible for creation management over a table, a column family and an index and data creation, storage, updating, deletion, query, intelligent scanning and the like;
Step 3: a data fusion subsystem is responsible for write operation between the structured storage engine and the NoSQL storage engine; and
Step 4: a distributed file subsystem is responsible for distributed storage of massive data.

In an example embodiment, Step 1 may further include: structured data write operation; and SQL supporting structured data read operation.

In an example embodiment, Step 2 may further include: NoSQL data write operation; and key-value supporting NoSQL data read operation.

In an example embodiment, Step 3 may further include that: a mapping relationship, on a data definition, between the structured storage engine and the NoSQL storage engine is established; and a synchronous lock mechanism is established to ensure data consistency when the structured storage engine and the NoSQL storage engine simultaneously execute write operation on the same data.

In an example embodiment, Step 4 may further include: write operation of the data fusion subsystem and read operation of the structured storage engine and the NoSQL storage engine.

In an example embodiment, between Step 1 and Step 3, the method may further include that: the structured storage engine sends a write request to the data fusion subsystem when executing write operation, and the data fusion subsystem establishes data definition consistency with the NoSQL storage engine through a mapping component.

In an example embodiment, between Step 1 and Step 4, the method may further include that: the structured storage engine sends the write request to the distributed file subsystem when executing read operation, and accesses the same piece of data stored in the distributed file subsystem according to the metadata definition in the established consistency, and the distributed file subsystem provides data information fused and stored by the structured storage engine and the NoSQL storage engine.

In an example embodiment, between Step 2 and Step 3, the method may further include that: the NoSQL storage engine sends a write request to the data subsystem when executing write operation, and the data fusion subsystem establishes data definition consistency with the structured storage engine through the mapping component.

In an example embodiment, between Step 2 and Step 4, the method may further include that: the NoSQL storage engine sends the write request to the distributed file subsystem when executing read operation, and accesses the same piece of data stored in the distributed file subsystem according to a metadata definition in the established consistency, and the distributed file subsystem provides the data information fused and stored by the structured storage engine and the NoSQL storage engine.

In an example embodiment, between Step 3 and Step 4, the method may further include that: the data fusion subsystem receives the write operation requests of the structured storage engine and the NoSQL storage engine, and write corresponding data into the distributed file subsystem to store a piece of shared data in the distributed file subsystem.

In order to facilitate understanding, referring to Fig. 4, a system for massive data fusion storage provided by the example embodiment includes:
(1) a structured storage engine, responsible for functions of structured data definition, loading, storage, query, analysis and the like of data and providing operation of data query, statistics, grouping, sorting and the like through an SQL like a conventional relational database; (2) a NoSQL storage engine, responsible for creation management over a table, a column family and an index and data creation, storage, updating, deletion, query, intelligent scanning and the like; (3) a data fusion subsystem, responsible for write operation between the structured storage engine and the NoSQL storage engine; and (4) a distributed file subsystem, responsible for distributed storage of massive data.

The method and system for supporting SQL and NoSQL massive data fusion storage provided by the example embodiment will be further described below.

Fig. 4 is a structural schematic diagram of a system for supporting SQL and NoSQL massive data fusion storage according to an example embodiment of the disclosure, and as shown in Fig. 4, the system for massive data fusion storage includes: a structured storage engine 101, a NoSQL storage engine 102, a data fusion subsystem 103 and a distributed file subsystem 104, wherein
the data fusion subsystem 103 includes a mapping component, and the mapping component is responsible for maintaining data definition consistency between the structured storage engine and the NoSQL storage engine. At the same time of defining a piece of metadata, the structured storage engine is required to specify a metadata definition of the metadata in the NoSQL storage engine, and correspondingly, at the same time of defining a piece of metadata, the NoSQL storage engine is required to specify a metadata definition of the metadata in the structured storage engine.

The data fusion subsystem 103 further includes a synchronous lock component, and the synchronous lock component is responsible for ensuring transaction consistency when the structured storage engine and the NoSQL storage engine simultaneously execute write operation on the same data.

The data fusion subsystem 103 further includes a data write component, and the data write component is responsible for receiving write operation requests of the structured storage engine and the NoSQL storage engine and writing corresponding data into the distributed file subsystem to store a piece of shared data in the distributed file subsystem.

It needs to be noted here that the name or number of each component in the SQL and NoSQL supporting massive data fusion storage system provided by the example embodiment may be inconsistent with the name or number of each component in the massive data fusion storage system provided by the above-mentioned embodiment, functions of each component may not be completely consistent and even are in an including or overlapped function relationship, this is just because the example embodiment is only an example implementation mode of the above-mentioned embodiment, and solutions provided by the two may be totally implemented and achieve the same effect.

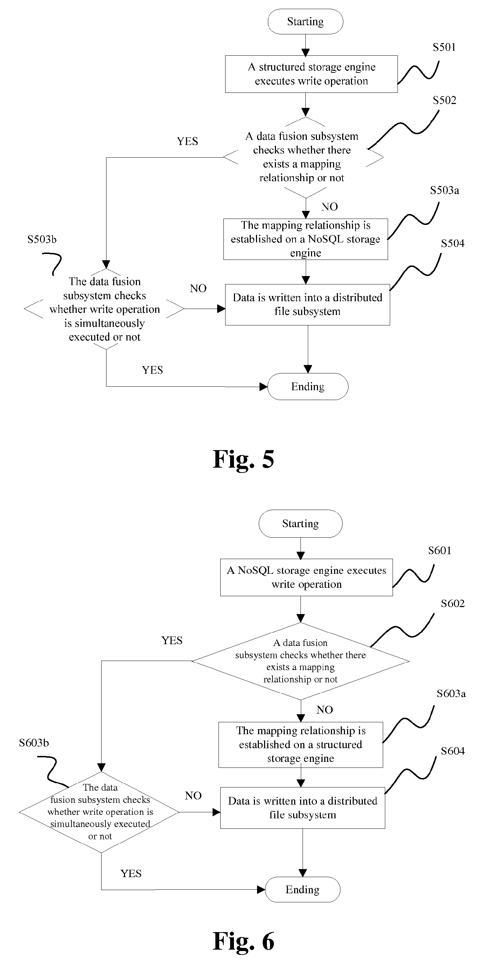

Fig. 5 is a flowchart of write operation processing of a structured storage engine according to an example embodiment of the disclosure, and as shown in Fig. 5, the write operation processing flow of the structured storage engine includes:
Step 501: the structured storage engine 101 sends an operation request to a data fusion subsystem 103 when executing write operation;
Step 502: the data fusion subsystem 103 receives the write operation request of the structured storage engine 101, judges whether or not there exists a mapping relationship in the structured storage engine 101 and a NoSQL storage engine 102, further judges whether or not there exists a condition that the structured storage engine 101 and the NoSQL storage engine 102 simultaneously execute write operation if there exists the mapping relationship, otherwise establishes the mapping relationship on the NoSQL storage engine 102;
Step 503a: when determining that there does not exist any mapping relationship, the data fusion subsystem 103 establishes the mapping relationship on the NoSQL storage engine 102 to ensure metadata definition consistency with the structured storage engine 101;
Step 503b: when determining that there exists a mapping relationship, the data fusion subsystem 103 further judges whether there exists the condition that the structured storage engine 101 and the NoSQL storage engine 102 simultaneously execute write operation or not; and
Step 504: the data fusion subsystem 103 sends the write operation request to a distributed file subsystem 104, and the distributed file subsystem 104 receives the request, starts writing data and finally feeds back a write operation result to the data fusion subsystem 103.

Fig. 6 is a flowchart of write operation processing of a NoSQL storage engine according to an example embodiment of the disclosure, and as shown in Fig. 6, the write operation processing flow of the NoSQL storage engine includes:
Step 601: the NoSQL storage engine 102 sends an operation request to a data fusion subsystem 103 when executing write operation;
Step 602: the data fusion subsystem 103 receives the write operation request of the NoSQL storage engine 102, judges whether or not there exists a mapping relationship in the structured storage engine 101 and a NoSQL storage engine 102, further judges whether or not there exists a condition that the structured storage engine 101 and the NoSQL storage engine 102 simultaneously execute write operation if there exists the mapping relationship, otherwise establishes the mapping relationship on the structured storage engine 101;
Step 603a: when determining that there does not exist any mapping relationship, the data fusion subsystem 103 establishes the mapping relationship on the structured storage engine 101 to ensure metadata definition consistency with the NoSQL storage engine 102;
Step 603b: when determining that there exists a mapping relationship, the data fusion subsystem 103 further judges whether or not there exists the condition that the structured storage engine 101 and the NoSQL storage engine 102 simultaneously execute write operation; and
Step 604: the data fusion subsystem 103 sends the write operation request to a distributed file subsystem 104, and the distributed file subsystem 104 receives the request, starts writing data and finally feeds back a write operation result to the data fusion subsystem 103.

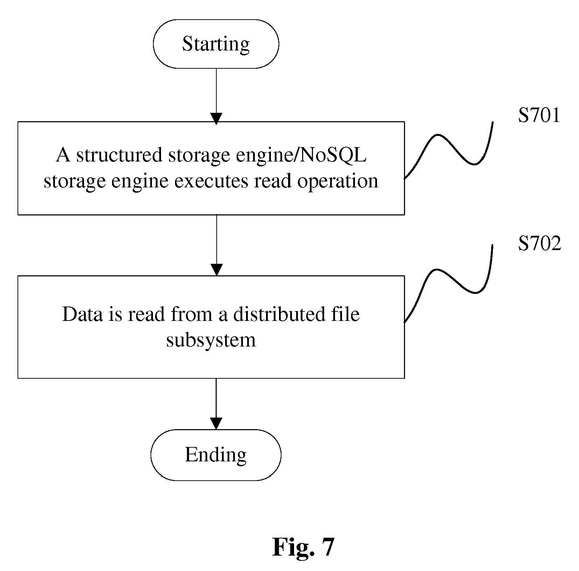

Fig. 7 is a flowchart of read operation of a structured storage engine and a NoSQL storage engine according to an example embodiment of the disclosure, and as shown in Fig. 7, the read operation flow of the structured storage engine and the NoSQL storage engine includes:
Step 701: the structured storage engine/NoSQL storage engine executes read operation; and
Step 702: data is read from a distributed file subsystem.

The data definition consistency between the structured storage engine 101 and the NoSQL storage engine 102 is ensured in write operation in Fig. 5 and Fig. 6 and the same piece of data is shared in the distributed file subsystem 104, so that both the structured storage engine 101 and the NoSQL storage engine 102 may directly read the data from the distributed file subsystem 104 during read operation.

By implementing the preferred embodiment, data of the mutually independent structured storage engine and NoSQL storage engine may be integrated to solve the problems of difficulty of the same piece of data in simultaneously supporting SQL and key-value manners and higher operation and maintenance cost in case of mutual independence of the data, thereby implementing a sharing storage massive data processing system simultaneously supporting the SQL and key-value manners.

It needs to be noted that each component may be implemented by hardware. For example: a processor includes each of the abovementioned components, or, each of the abovementioned components is located in a processor respectively.

In another embodiment, software is provided, which is configured to execute the technical solutions described in the above-mentioned embodiment and example implementation modes.

In another embodiment, a storage medium is further provided, in which the abovementioned software is stored, the storage medium including, but not limited to: a compact disc, a floppy disk, a hard disk, an erasable memory and the like.

From the above description, it can be seen that the embodiment of the disclosure achieves technical effects as follows: an existing system supports only one of the SQL manner and the key-value manner and may not meet the requirement of service flexibility, while the embodiment of the disclosure may support both the SQL and key-value manners by integrating the data of the mutually independent structured storage engine and NoSQL storage engine, a proper using manner may be selected for a service according to a requirement, and moreover, the structured storage engine and the NoSQL storage engine share the same piece of data in the distributed file subsystem, so that data redundancy is reduced, and system operation and maintenance cost is also reduced.

Obviously, those skilled in the art should know that each component or step of the disclosure may be implemented by a universal computing device, and the components or steps may be concentrated on a single computing device or distributed on a network formed by a plurality of computing devices, and may optionally be implemented by programmable codes executable for the computing devices, so that the components or steps may be stored in a storage device for execution with the computing devices, the shown or described steps may be executed in sequences different from those described here in some circumstances, or may form each integrated circuit component respectively, or multiple components or steps therein may form a single integrated circuit component for implementation. As a consequence, the disclosure is not limited to any specific hardware and software combination.

The above is only the example embodiments of the disclosure and not intended to limit the disclosure, and for those skilled in the art, the disclosure may have various modifications and variations. Any modifications, equivalent replacements, improvements and the like within the spirit and principle of the disclosure shall fall within the scope of protection of the disclosure.

### Industrial Applicability

The technical solutions provided by the embodiment of the disclosure may be applied to the communications field, the problem that the structured storage engine and the NoSQL storage engine may not meet diversified service requirements and increase operation and maintenance cost in the related art is solved, and the effects of reducing data redundancy and lowering system operation and maintenance cost are further achieved.

## Claims

1. A method for massive data fusion storage, comprising:
receiving, by a data fusion subsystem, a write operation request from a structured storage engine or a Not Only Structured Query Language, NoSQL, storage engine, wherein the structured storage engine supports SQL-based structured data read/write operation and the NoSQL storage engine supports key-value-based NoSQL data read/write operation; and
executing, by the data fusion subsystem, write operation on a distributed file subsystem according to the write operation request, wherein the distributed file subsystem is further configured to receive a read operation request from the structured storage engine or the NoSQL storage engine and execute read operation according to the read operation request.

2. The method as claimed in claim 1, wherein before receiving, by the data fusion subsystem, the write operation request from the structured storage engine or the NoSQL storage engine, the method further comprises:
establishing, by the data fusion subsystem, a mapping relationship between the structured storage engine and the NoSQL storage engine in terms of metadata definition, wherein the mapping relationship is used for keeping data consistency between the structured storage engine and the NoSQL storage engine.

3. The method as claimed in claim 1 or 2, wherein, when the data fusion subsystem receives the write operation request from the structured storage engine, executing, by the data fusion subsystem, the write operation on the distributed file subsystem according to the write operation request comprises:
judging, by the data fusion subsystem, whether or not there exists a mapping relationship between the structured storage engine and the NoSQL storage engine, sending, by the data fusion subsystem, the write operation request to the distributed file subsystem to execute data write operation when a judgment result is that there exists the mapping relationship between the structured storage engine and the NoSQL storage engine and the write operation is not simultaneously executed by the structured storage engine and the NoSQL storage engine; and/or establishing, by the data fusion subsystem, the mapping relationship on the NoSQL storage engine when the judgment result is that there does not exist the mapping relationship between the structured storage engine and the NoSQL storage engine.

4. The method as claimed in claim 1 or 2, wherein, when the data fusion subsystem receives the write operation request from the NoSQL storage engine, executing, by the data fusion subsystem, the write operation on the distributed file subsystem according to the write operation request comprises:
judging, by the data fusion subsystem, whether or not there exists a mapping relationship between the structured storage engine and the NoSQL storage engine, sending, by the data fusion subsystem, the write operation request to the distributed file subsystem to execute data write operation when a judgment result is that there exists the mapping relationship between the structured storage engine and the NoSQL storage engine and the write operation is not simultaneously executed by the structured storage engine and the NoSQL storage engine; and/or establishing, by the data fusion subsystem, the mapping relationship on the structured storage engine when the judgment result is that there does not exist the mapping relationship between the structured storage engine and the NoSQL storage engine.

5. The method as claimed in claim 1 or 2, wherein after executing, by the data fusion subsystem, the write operation on the distributed file subsystem according to the write operation request, the method further comprises:
receiving, by the data fusion subsystem, a write operation result fed back by the distributed file subsystem.

6. A system for massive data fusion storage, comprising: a data fusion subsystem, a structured storage engine, a Not Only Structured Query Language, NoSQL, storage engine and a distributed file subsystem, wherein the data fusion subsystem comprises:
a first receiving component, configured to receive a write operation request from the structured storage engine or the NoSQL storage engine, wherein the structured storage engine supports SQL-based structured data read/write operation and the NoSQL storage engine supports key-value-based NoSQL data read/write operation;
a processing component, configured to execute write operation on the distributed file subsystem according to the write operation request;
wherein the distributed file subsystem is further configured to receive a read operation request from the structured storage engine or the NoSQL storage engine and execute read operation according to the read operation request.

7. The system as claimed in claim 6, wherein the data fusion subsystem further comprises:
an establishment component, configured to establish a mapping relationship between the structured storage engine and the NoSQL storage engine in terms of metadata definition, wherein the mapping relationship is used for keeping data consistency between the structured storage engine and the NoSQL storage engine.

8. The system as claimed in claim 6 or 7, wherein the processing component comprises:
a first processing element, configured to, when the data fusion subsystem receives the write operation request from the structured storage engine, judge whether or not there exists the mapping relationship between the structured storage engine and the NoSQL storage engine, send the write operation request to the distributed file subsystem to execute data write operation in a case that a judgment result is that there exists the mapping relationship between the structured storage engine and the NoSQL storage engine and the write operation is not simultaneously executed by the structured storage engine and the NoSQL storage engine, and/or establish the mapping relationship on the NoSQL storage engine in a case that the judgment result is that there does not exist the mapping relationship between the structured storage engine and the NoSQL storage engine.

9. The system as claimed in claim 6 or 7, wherein the processing component comprises:
a second processing element, configured to, when the data fusion subsystem receives the write operation request from the NoSQL storage engine, judge whether or not there exists the mapping relationship between the structured storage engine and the NoSQL storage engine, send the write operation request to the distributed file subsystem to execute data write operation in a case that a judgment result is that there exists a mapping relationship between the structured storage engine and the NoSQL storage engine and the write operation is not simultaneously executed by the structured storage engine and the NoSQL storage engine, and/or establish the mapping relationship on the structured storage engine in a case that the judgment result is that there does not exist a mapping relationship between the structured storage engine and the NoSQL storage engine.

10. The system as claimed in claim 6 or 7, wherein the data fusion subsystem further comprises:
a second receiving component, configured to receive a write operation result fed back by the distributed file subsystem.
